## Europäisches Patentamt
## European Patent Office
## Office européen des brevets

(19)

(11) Publication number: **0 054 468**

A1

(12) **EUROPEAN PATENT APPLICATION**

(21) Application number: **81401921.2**

(22) Date of filing: **03.12.81**

(51) Int. Cl.³: **B 60 T 13/16**
**F 16 J 15/32**

(30) Priority: **11.12.80 US 215290**

(43) Date of publication of application:
**23.06.82 Bulletin 82/25**

(84) Designated Contracting States:
**DE FR GB IT SE**

(71) Applicant: **THE BENDIX CORPORATION**
**Executive Offices Bendix Center**
**Southfield Michigan 48037(US)**

(72) Inventor: **Grabill, Paul Joseph**
**54739 Winding Brook Drive**
**Mishawaka Indiana 46544(US)**

(74) Representative: **Huchet, André et al,**
**Service Brevets Bendix 44, rue François 1er**
**F-75008 Paris(FR)**

(54) **Hydraulic brake booster.**

(57) A hydraulic brake booster comprising a housing with a bore (14) slidably receiving a piston (34) which divides it into a first chamber (42) communicating with a fluid inlet (28) and a second chamber (44) communicating with a fluid outlet (30), a passage (60, 62) defined within the piston for communicating pressurized fluid from the first to the second chamber under the control of an operator-actuated valve (64, 66), and an additional flow path with a pressure differential responsive valve member for allowing fluid flow only from the second to the first chamber via said flow path while preventing fluid flow in the opposite direction.

The additional flow path is defined by an axially-extending radial clearance provided between the piston (34) and the bore (16), and the valve member is a resilient lip seal carried by the piston and engaging the bore with a yieldable lip directed toward the first chamber (42).

The booster is for use particularly in automotive power braking systems.

EP 0 054 468 A1

./...

FIG. 2

## HYDRAULIC BRAKE BOOSTER

The present invention relates to a hydraulic brake booster, and more specifically, to a hydraulic brake booster of the type which is used on heavy automotive vehicles such as highway trucks and construction machines which employ hydraulically-actuated brakes.

Hydraulic brake boosters are hydraulic differential pressure servomotors. A power-driven pump on the vehicle supplies pressurized fluid to the servomotor which operates a master cylinder for the vehicle brake system. Hydraulic brake boosters make it possible for a human operator to effectively brake a large and heavy vehicle by the application of a relatively small force to the brake booster via a brake pedal. The brake booster amplifies the operator-applied force to operate a master cylinder actuating the vehicle brakes.

A hydraulic brake booster is known, for instance, from Figure 3 of United States Patent No. 3 967 536 issued July 6, 1976 ; this hydraulic brake booster includes a piston which is acted upon by a differential hydraulic pressure to provide an operating force to a master cylinder. The piston is slidably received in a bore defined within the housing of the hydraulic brake booster. A seal is carried by the piston to prevent the leakage of hydraulic fluid between the piston and the bore. In order to prevent the creation of a hydraulic differential pressure which resists movement of the piston in the brake-applying direction during an unusually rapid movement of the brake pedal, a ball check valve is provided in the piston. This ball check valve allows hydraulic fluid to flow through the piston until the power-driven pump can provide a sufficient volume of pressurized fluid to establish a hydraulic pressure differential closing the check valve. The hydraulic pressure differential then moves the piston in the brake-applying direction to effect a brake application.

With a power brake booster of the kind illustrated in the above patent, the ball check valve represents a potential source of malfunction for the hydraulic booster. In the event that a particle of dirt or other contamination becomes lodged in the ball check valve so as to prevent the valve from closing, pressurized fluid supplied by the power-driven pump flows through the open check valve. As a result, a sufficiently great fluid pressure differential is not maintained across the piston to provide an effective operating force to the master cylinder. The hydraulic brake booster is rendered partially or totally inoperative. While non-assisted braking is retained, a large and heavy vehicle is difficult to brake without power assistance.

A further consideration with a hydraulic brake booster of the type described above is that the manufacturing costs associated with the incorporation of the ball check valve into the piston add to the total manufacturing cost for the hydraulic brake booster.

It is, therefore, an essential object of the present invention to avoid the drawbacks of prior hydraulic brake boosters by substituting a cheaper and more reliable fluid pressure differential responsive device for the known ball check valve, thus eliminating the potential leakage path represented thereby and lowering the manufacturing costs related thereto.

This object is achieved, according to the teachings of this invention, and in a hydraulic brake booster of the kind comprising a housing having an inlet and an outlet for communicating pressurized fluid through said housing via an elongated bore defined therein, a piston slidably received in said bore and sealingly cooperating with said housing to divide said bore into a pair of chambers, one of said chambers communicating with said inlet and the other of said chambers communicating with said outlet, a passage defined in the piston for communicating pressurized fluid from said one chamber to said other chamber, an operator-actuated valve carried by the piston for opening and closing said passage in response to an operator input, and an additional flow path with a pressure differential responsive valve member for allowing fluid flow from said other chamber to said one chamber via said flow path while preventing fluid flow in the opposite direction, thanks to the fact that said flow path is defined by an axially-extending radial clearance provided between the piston and the bore, and that said valve member is a sealing member carried by the piston and cooperating with both the piston and the bore to permit fluid flow via said radial clearance only from said other chamber to said one chamber as a result of the fluid pressure in the former exceeding momentarily that in the latter.

In a preferred embodiment of the invention, the sealing member is a yieldable resilient lip seal having a lip directed toward said one chamber and engaging the bore, said lip cooperating with said bore to prevent fluid flow from said one chamber to said other chamber via the radial clearance, and yielding responsive to the fluid pressure in said other chamber exceeding that in said one chamber to allow fluid flow in the opposite direction via said radial clearance.

These and other advantageous features of the invention will become readily apparent from reading the following description of a preferred embodiment, given by way of example only, and with reference to the accompanying drawings, in which :

    - Figure 1 is a cross-sectional view of a hydraulic brake booster according to the prior art ;

    - Figure 2 is a fragmentary cross-sectional view of a hydraulic brake booster according to the invention ; and

    - Figure 3 is an enlarged fragmentary view of an encircled portion of Figure 2.

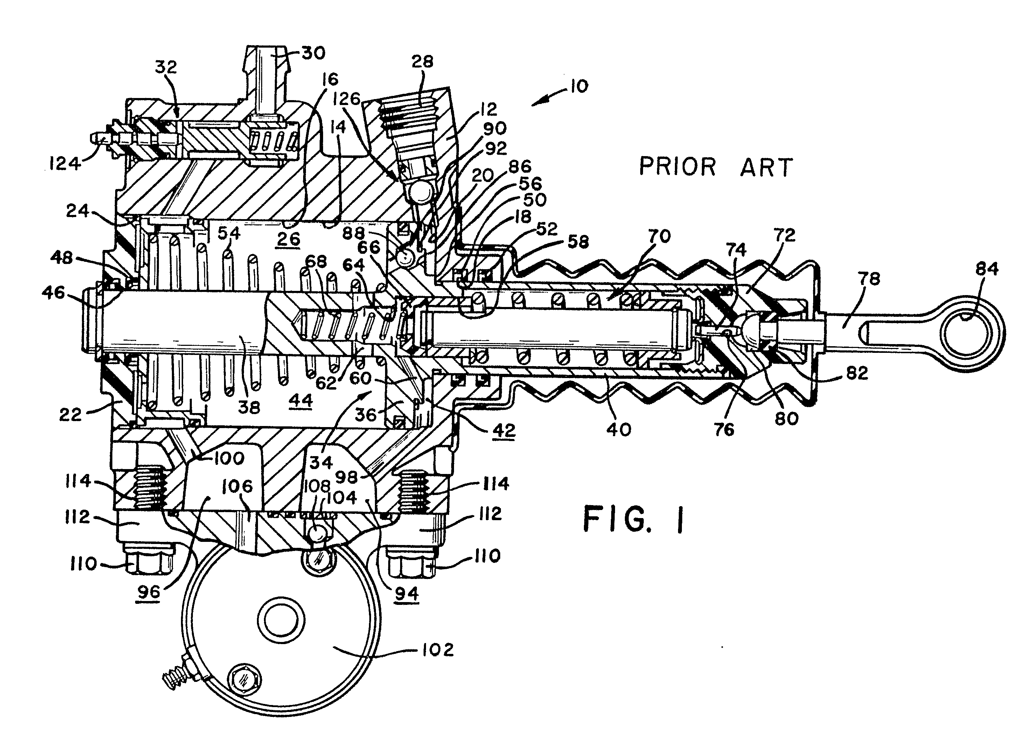

With reference to Figure 1, a hydraulic brake booster 10 according to the prior art includes a cup-shaped housing 12 having a bore 14 therethrough. The bore 14 is stepped to provide a large diameter portion 16 and a small diameter portion 18 which cooperate to define an annular shoulder 20 therebetween. An annular wall member 22 is received in the left end of bore portion 16 and carries a sealing member 24 which cooperates with the bore portion 16. The housing 12 and wall member 22 cooperate to define a compartment 26. An inlet 28 is defined in housing 12 for communicating pressurized hydraulic fluid from a pressure source (not shown) to the right end of the compartment 26. The housing 12 further defines an outlet 30 which communicates the left end of compartment 26 with a fluid reservoir (not shown). A flow-responsive switch 32, the function of which will be hereinafter explained, is disposed in outlet 30.

A piston, generally referenced by the numeral 34, is slidably received in the cup-shaped housing 12. The piston 34 includes a radially-extending cylindrical land 36, an elongated cylindrical output member 38, and an elongated cylindrical input member 40. Piston 34 divides compartment 26 into a first chamber 42 and a second chamber 44. The chamber 42 communicates with the inlet 28 while the chamber 44 communicates with outlet 30. The output member 38 slidingly passes through an aperture 46 in the annular wall member 22. Wall member 22 carries an annular sealing member 48 which sealingly cooperates with output member 38. The left end of output member 38 drivingly cooperates with a master cylinder (not shown) upon leftward movement of the piston 34 relative to the housing 12. Similarly, the input member 40 slidingly passes through the small diameter bore portion 18. The housing 12 carries a pair of annular sealing members 50 and 52 which sealingly cooperate with input member 40. Output member 38 and input member 40 are integral with land 36. A spring 54 is received in chamber 44 and biases the piston 34 rightward so that a step 56 on the piston engages the shoulder 20 to define a nonbraking position for the piston 34.

The piston 34 defines a stepped axial bore 58 which communicates with chambers 42 and 44 via radial bores 60 and 62, respectively. The bore 58 is stepped to provide a valve seat 64 intermediate of the bores 60 and 62. A valve member 66 is movably received in the bore 58 and is engageable with the valve seat 64. A coil spring 68 is received in the left end of bore 58 and engages the valve member 66. Spring 68 biases valve member 66 rightwardly to a position in which valve member 66 is spaced from valve seat 64.

A resilient input assembly 70 is slidably received in the bore 58 and is engageable with the valve member 66 to move the latter into engagement with the valve seat 64. A cap member 72 threadably engages the right end of bore 58 within input member 40 so as to retain the resilient input assembly 70 therein. A pin 74 passes through an aperture 76 in the cap 72 and engages the right end of the resilient input assembly 70. An eye member 78 is carried in a recess 80 in cap member 72 by a retaining ring 82. The eye member 78 is movable axially relative to the cap member 72 to engage the pin 74 and to move the resilient input assembly 70 and valve member 66 relative to the piston 34. The eye member 78 defines an aperture 84 by which the hydraulic brake booster 10 is connectable to a brake pedal (not shown), as is well known in the art.

A downwardly inclined, stepped bore 86 is defined in the land 36 of piston 34. A ball member 88 is movably received in the bore 86 and engages a valve seat defined by the step in the bore 86 to define a ball check valve 90. An annular snap ring 92 is carried on the piston 34 and spans the right end of the bore 86 to retain the ball member 88 therein.

Additionally, the housing 12 defines an inlet 94 and an outlet 96 which communicate with chambers 42 and 44, respectively, via bores 98 and 100, respectively. An electric motor-driven, positive-displacement auxiliary pump 102 communicates with the inlet 94 and with the outlet 96 via a pair of bores 104 and 106, respectively. The bore 104 includes a ball check valve 108 which prevents fluid flow through the pump 102 from bore 104 to bore 106. Cap screws 110 pass through apertures in the ears 112 of pump 102 and threadably engage threaded bores 114 in the housing 12 to secure the auxiliary pump 102 to the brake booster 10.

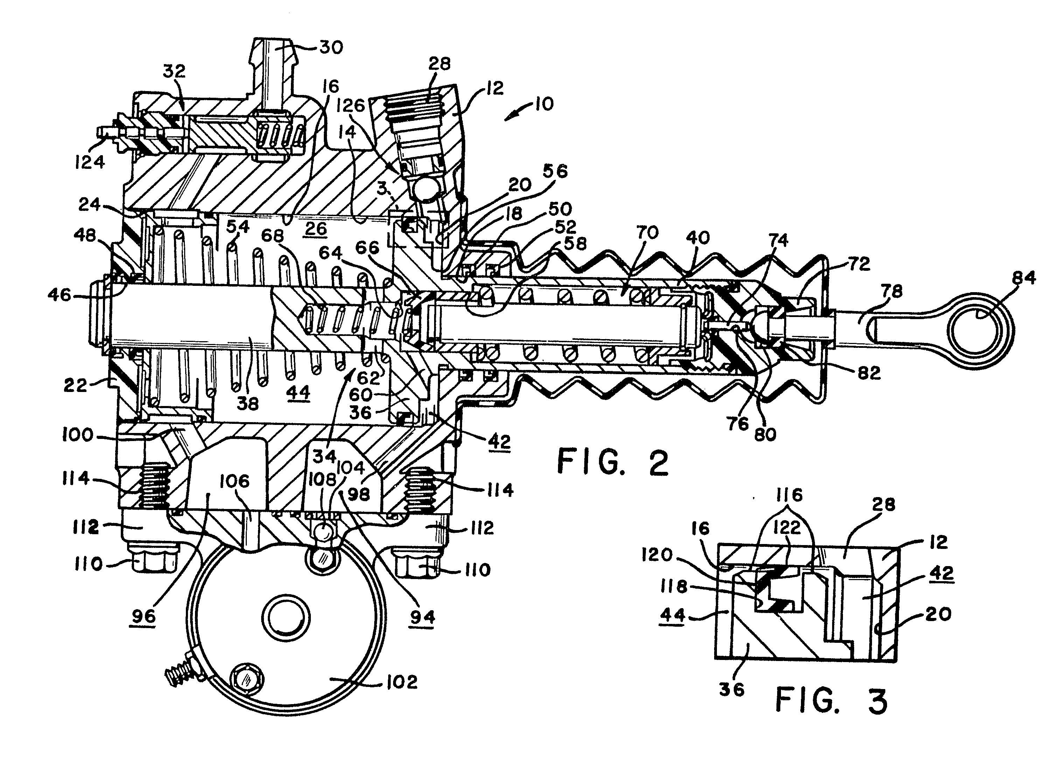

Turning now to Figure 2, the hydraulic brake booster according to the invention coincides with the prior art booster described hereinbefore with the exception of features to be hereinafter described. Accordingly, the same reference numerals are used throughout to designate features which are analogous in structure or function.

Upon inspecting Figure 2, it will be apparent that a hydraulic brake booster according to the invention includes a piston 34 having only one flow path therethrough. The single flow path is defined by radial bore 60, axial bore 58, valve seat 64, and radial bore 62. In other words, the ball check valve 90, including stepped bore 86, ball member 88, and snap ring 92 are absent from the invention.

The land 36, viewing Figure 3, defines an axially-extending radial clearance 116 with the large diameter portion 16. Further, the land 36 defines an annular groove 118 which receives a yieldable resilient lip seal 120. The lip seal 120 includes a movable resilient lip 122 disposed toward the first chamber 42. Lip 122 slidably cooperates with the large diameter portion 16 to substantially prevent fluid flow from chamber 42 to chamber 44 via the radial clearance 116. On the other hand, the resilient lip 122 is responsive to a fluid pressure differential between the chambers 44 and 42 to move radially inwardly out of engagement with the bore portion 16 so as to allow fluid flow from the chamber 44 to chamber 42 via the radial clearance 116. Consequently, the radial clearance 116 defines a flow path by which fluid may flow between the chambers 44 and 42.

When a brake application is effected, via the prior art brake booster illustrated in Figure 1, eye member 78 is shifted leftward in the recess 80 by the movement of the vehicle brake pedal. Consequently, the valve member 66 is shifted leftward toward engagement with the valve seat 64 by leftward movement of the pin 74 and input assembly 70. The approach of valve member 66 to valve seat 64 causes a resistance to the flow of pressurized fluid from the inlet 28 to the outlet 30 via chamber 42, radial bore 60, axial bore 58, radial bore 62 and chamber 44. Consequently, a fluid pressure differential is created between the chambers 42 and 44 and acts on the piston 34 to shift the piston leftward, effecting a brake application.

In the event that the flow of pressurized fluid from inlet 28 to outlet 30 is terminated while the vehicle is in operation, for example, because of a breached supply conduit to the inlet 28, the flow responsive switch 32 closes an electrical circuit which is connected to a contact 124 of the switch 32. As a result, the electric motor-driven auxiliary pump 102 is activated along with a warning signal in the operator's compartment of the vehicle. The pump 102 circulates fluid from chamber 44 to chamber 42 via bore 100, outlet 96, bore 106, bore 104, inlet 94, and bore 98. However, the pump 102 circulates fluid at a relatively low rate.

If a brake application is effected while pump 102 is in operation, the initial pressure differential created between the chambers 42 and 44 causes a ball check valve 126 in inlet 28 to close so that the pump 102 can build up a sufficient pressure differential between the chambers 42 and 44 to provide an effective brake application. However, in the event that the initial movement of the piston 34 upon a brake application is rapid and causes the volume of chamber 42 to increase at a rate which is greater than the rate at which pump 102 is circulating fluid, the fluid pressure in chamber 44 momentarily exceeds that in chamber 42. As a result, the ball check valve 90 is forced open and allows fluid to flow from the chamber 44 to chamber 42. Because fluid is allowed to flow from chamber 44 to chamber 42 via the check valve 90, the brake pedal does not unduly resist rapid movement. Undue resistance to pedal movement during a rapid brake application would be disturbing to a vehicle operator and is, therefore, undesirable. Further, the fluid transferred from chamber 44 to chamber 42 via the check valve 90 aids the motor-driven auxiliary pump 102 to maintain the chamber 42 full of fluid. Consequently, as soon as the rapid movement of the piston 34 is ended by the resistance to movement provided by the master cylinder, the pump 102 builds pressure in the chamber 42 to provide an effective power-assisted brake application. If the chamber 42 were not kept full of fluid, a delay would be experienced between the movement of the brake pedal and the provision of an effective power-assisted brake application because of the relatively low rate of fluid circulation provided by the auxiliary pump 102.

Similarly, when a rapid brake application is effected with the auxiliary pump 102 operating in a hydraulic brake booster according to the invention, the pressure in chamber 44 momentarily exceeds the pressure in chamber 42. As a result, the resilient lip 122 of lip seal 120 disengages from the large diameter bore portion 16 to allow fluid to flow from chamber 44 to chamber 42 via the radial clearance 116. Because the chamber 42 is at all times kept substantially full of fluid supplied either by pump 102 or via radial clearance 116 from chamber 44, the relatively low rate of fluid circulation provided by the auxiliary pump 102 is adequate to provide an effective brake application without an undue delay after the brake pedal is depressed.

Those skilled in the art will recognize that the lip seal 120 is not so susceptible to a loss of its sealing integrity due to contamination in the hydraulic fluid as is the ball check valve of the prior art hydraulic brake booster illustrated by Figure 1. Because the rate of fluid circulation provided by the auxiliary pump 102 is relatively low, even a small loss of sealing integrity between the chambers 42 and 44 can decrease the pressure differential created between the chambers upon a brake application. Further, the elimination of the ball check valve 90 and of snap ring 92 from the invention results in reduced manufacturing costs for the invention when compared to prior hydraulic brake boosters.

## CLAIMS

1. A hydraulic brake booster (10) comprising a housing (12) having an inlet (28) and an outlet (30) for communicating pressurized fluid through said housing via an elongated bore (14) defined therein, a piston (34) slidably received in said bore and sealingly cooperating with said housing to divide said bore into a pair of chambers (42, 44), one (42) of said chambers communicating with said inlet (28) and the other (44) of said chambers communicating with said outlet (30), a passage (60, 58, 62) defined in the piston for communicating pressurized fluid from said one chamber (42) to said other chamber (44), an operator-actuated valve (64, 66) carried by the piston for opening and closing said passage in response to an operator input, and an additional flow path with a pressure differential responsive valve member for allowing fluid flow from said other chamber (44) to said one chamber (42) via said flow path while preventing fluid flow in the opposite direction, characterized in that said flow path is defined by an axially-extending radial clearance (116) provided between the piston and the bore, and in that said valve member is a sealing member (120) carried by the piston and cooperating with both the piston and the bore to permit fluid flow via said radial clearance only from said other chamber (44) to said one chamber (42) as a result of the fluid pressure in the former exceeding momentarily that in the latter.

2. A hydraulic brake booster according to claim 1, characterized in that said sealing member is a yieldable resilient lip seal (120) having a lip (122) directed toward said one chamber (42) and engaging the bore (14), said lip cooperating with said bore to prevent fluid flow from said one chamber (42) to said other chamber (44) via said radial clearance (116), and yielding responsive to the fluid pressure in said other chamber (44) exceeding that in said one chamber (42) to allow fluid flow in the opposite direction via said radial clearance (116).

3. A hydraulic brake booster according to claim 1 or 2, characterized in that said passage (60, 58, 62) is the only means defined within the piston (34) for allowing fluid flow between said chambers (42, 44).

PRIOR ART

FIG. 1

1/2

FIG. 2

FIG. 3

2/2

0054468

European Patent Office

EUROPEAN SEARCH REPORT

0054468

Application number

EP 81 40 1921.2

## DOCUMENTS CONSIDERED TO BE RELEVANT

| Category | Citation of document with indication, where appropriate, of relevant passages | Relevant to claim |
|---|---|---|
| Y | US – A – 3 148 592 (SCHULTZ et al.)<br>* column 2, lines 42 to 57; fig. *<br>-- | 1–3 |
| D,Y | US – A – 3 967 536 (BACH)<br>* fig. 2, 3 *<br>-- | 1,3 |
| Y | US – A – 3 980 004 (JONES et al.)<br>* column 2, lines 14 to 63; fig. *<br>-- | 1,2 |
| A | GB – A – 1 174 649 (TEVES)<br>---- | |

### CLASSIFICATION OF THE APPLICATION (Int. Cl. 3)

B 60 T 13/16

F 16 J 15/32

### TECHNICAL FIELDS SEARCHED (Int.Cl. 3)

B 60 T 13/00

F 16 J 15/00

The present search report has been drawn up for all claims

| Place of search | Date of completion of the search | Examiner |
|---|---|---|
| Berlin | 04-03-1982 | LUDWIG |

EPO Form 1503.1  06.78